# EUROPEAN PATENT APPLICATION

(11) **EP 4 564 388 A1**
(43) Date of publication of application: **04.06.2025**
(21) Application number: 24212618.3
(22) Date of filing: 13.11.2024
(51) Int. Cl.: H01G 4/30, H01G 4/224, H01G 4/12, H01G 4/012

(54) **MULTILAYER ELECTRONIC CAPACITOR**

(30) Priority: 28.11.2023 KR 20230168077
(71) Applicant: Samsung Electro-Mechanics Co., Ltd., Gyeonggi-do (KR)
(72) Inventor: Hong, Hyuk Jin, Suwon-si, Gyeonggi-do (KR); Song, Young Hoon, Suwon-si, Gyeonggi-do (KR); Yang, Song Hee, Suwon-si, Gyeonggi-do (KR)
(74) Representative: Grünecker Patent- und Rechtsanwälte PartG mbB

(57) **Abstract**

A multilayer electronic component includes a body including a capacitance formation portion including dielectric layers and internal electrodes, and cover portions disposed on both ends of the capacitance formation portion; and external electrodes disposed on the body, wherein the capacitance formation portion includes an internal portion and an external portion, and wherein, when the average number of moles of rare earth elements based on 100 moles of titanium (Ti) included in the internal portion is defined as RE1, the average number of moles of rare earth elements based on 100 moles of titanium (Ti) included in the external portion is defined as RE2, and the average number of moles of rare earth elements based on 100 moles of titanium (Ti) included in the cover portion is defined as RE3, RE1 < RE2 and RE3 < RE2 is satisfied.

## Description

### CROSS-REFERENCE TO RELATED APPLICATION(S)

This application claims benefit of priority to Korean Patent Application No. 10-2023-0168077 filed on November 28, 2023 in the Korean Intellectual Property Office, the disclosure of which is incorporated herein by reference in its entirety.

### BACKGROUND

### 1. FIELD

The present disclosure relates to a multilayer electronic component.

### 2. DESCRIPTION OF RELATED ART

A multilayer ceramic capacitor (MLCC), a multilayer electronic component, may be a chip condenser mounted on the printed circuit boards of various electronic products including image display devices such as a liquid crystal display (LCD) and a plasma display panel (PDP), a computer, a smartphone, a mobile phone, or the like, charging or discharging electricity therein or therefrom.

Such a multilayer ceramic capacitor may be used as a component of various electronic devices since a multilayer ceramic capacitor may have a small size and high capacitance and may be easily mounted. As various electronic devices such as a computer and a mobile device have been designed to have a smaller size and higher output, the demand for miniaturization and increased capacitance of multilayer ceramic capacitors has increased.

The multilayer electronic components may need to have excellent reliability to operate smoothly even in harsh environments such as high temperature, high voltage, or the like. To address the issue, reliability may be improved by adding rare earth elements. More specifically, the "deterioration" mechanism, directly related to reliability, may be affected by the movement of oxygen vacancy. To suppress the deterioration, the concentration of oxygen vacancy may be reduced to prevent insulation resistance degradation in high temperature environments. To reduce insulation resistance degradation, by implementing a microstructure similar to a grain of a core-shell structure including a predetermined percentage or more of rare earth elements, reliability of the multilayer ceramic capacitors may be improved. When rare earth elements are added excessively, the dielectric constant may decrease or the target temperature coefficient of capacitance (TCC) properties may not be satisfied, and there may be the disadvantage of being uneconomical.

### SUMMARY

An embodiment of the present disclosure is to provide a multilayer electronic component having excellent reliability, even when a relatively small content of rare earth elements are added.

An embodiment of the present disclosure is to provide a multilayer electronic component having excellent reliability even when rare earth elements are added differently for each region of the multilayer electronic component.

According to an embodiment of the present disclosure, a multilayer electronic component includes a body including a capacitance formation portion including dielectric layers and internal electrodes disposed alternately with the dielectric layers in a first direction, and cover portions disposed on both ends of the capacitance formation portion in the first direction; and external electrodes disposed on the body, wherein the capacitance formation portion includes an internal portion disposed in a central portion in the first direction of the capacitance formation portion, and an external portion disposed between the internal portion and the cover portions, and wherein, when the average number of moles of rare earth elements based on 100 moles of titanium (Ti) included in the internal portion is defined as RE1, the average number of moles of rare earth elements based on 100 moles of titanium (Ti) included in the external portion is defined as RE2, and the average number of moles of rare earth elements based on 100 moles of titanium (Ti) included in the cover portion is defined as RE3, RE1 < RE2 and RE3 < RE2 is satisfied.

### BRIEF DESCRIPTION OF DRAWINGS

The and other aspects, features, and advantages of the present disclosure will be more clearly understood from the following detailed description, taken in combination with the accompanying drawings, in which:
FIG. 1 is a perspective diagram illustrating a multilayer electronic component according to an embodiment of the present disclosure;
FIG. 2 is an exploded perspective diagram illustrating a lamination structure of an internal electrode according to an embodiment of the present disclosure;
FIG. 3 is a cross-sectional diagram taken along line I-I' in FIG. 1;
FIG. 4 is a cross-sectional diagram taken along line II-II' in FIG. 1;
FIG. 5 is a diagram illustrating different regions of the example illustrated in FIG. 3;
FIG. 6 is a graph indicating a content of rare earth elements according to LP-LP' in FIG. 5 according to an embodiment of the present disclosure; and
FIG. 7 is a graph indicating a content of rare earth elements according to LP-LP' in FIG. 5 according to another embodiment of the present disclosure.

### DETAILED DESCRIPTION

Hereinafter, embodiments of the present disclosure will be described as below with reference to the accompanying drawings.

These embodiments are described in sufficient detail to enable those skilled in the art to practice the present disclosure. It is to be understood that the various embodiments of the present disclosure, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure. The following detailed description is, accordingly, not to be taken in a limiting sense, and the scope of the present disclosure are defined only by appended claims, appropriately interpreted, along with the full range of equivalents to which the claims are entitled.

In the drawings, same elements will be indicated by same reference numerals. Also, redundant descriptions and detailed descriptions of known functions and elements which may unnecessarily make the gist of the present disclosure obscure will be omitted. In the accompanying drawings, some elements may be exaggerated, omitted or briefly illustrated, and the sizes of the elements do not necessarily reflect the actual sizes of these elements. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the drawings, the first direction may be defined as a lamination direction or a thickness (T) direction, the second direction may be defined as a length (L) direction, and the third direction may be defined as a width (W) direction.

### Multilayer Electronic Component

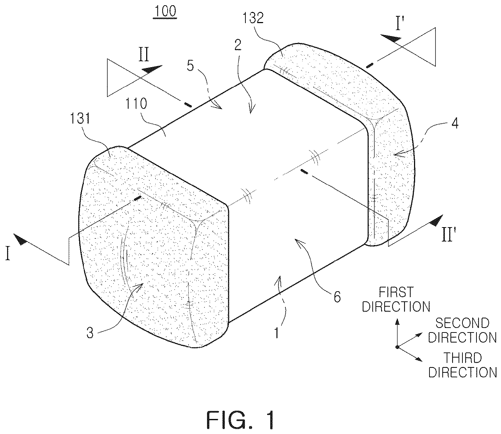

FIG. 1 is a perspective diagram illustrating a multilayer electronic component according to an embodiment.

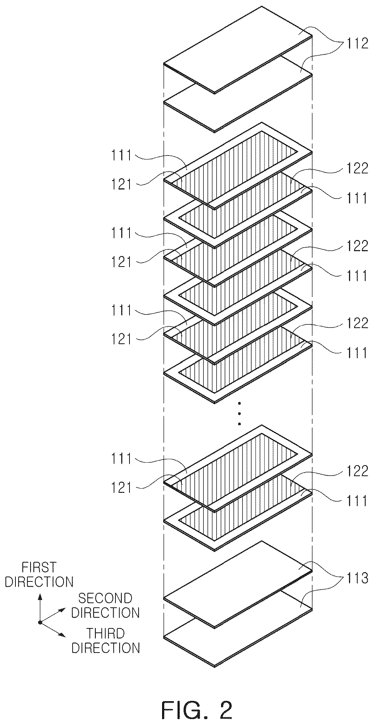

FIG. 2 is an exploded perspective diagram illustrating a lamination structure of an internal electrode according to an embodiment.

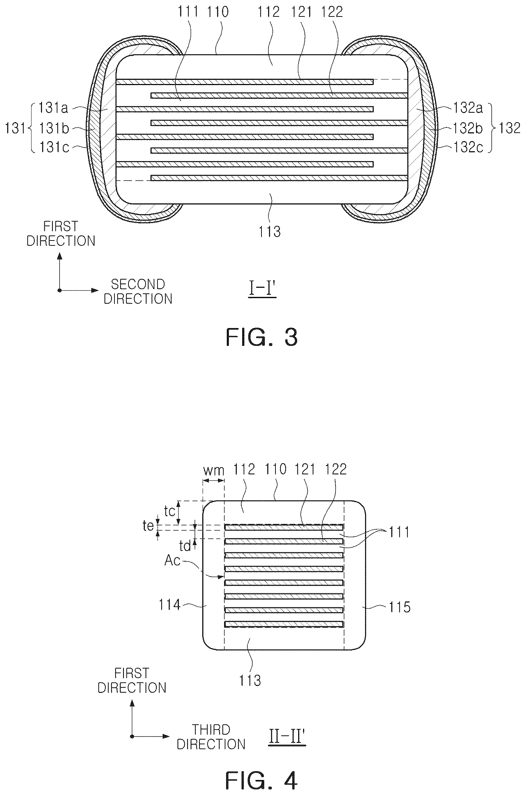

FIG. 3 is a cross-sectional diagram taken along line I-I' in FIG. 1.

FIG. 4 is a cross-sectional diagram taken along line II-II' in FIG. 1.

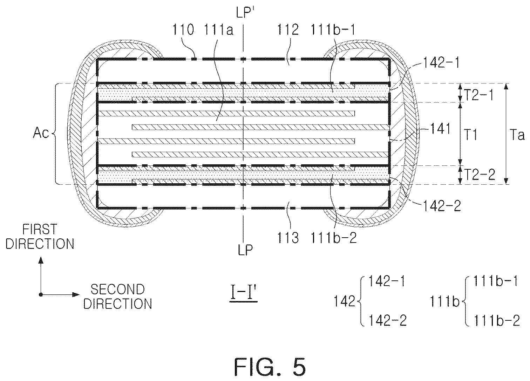

FIG. 5 is a diagram illustrating different regions of the example illustrated in FIG. 3.

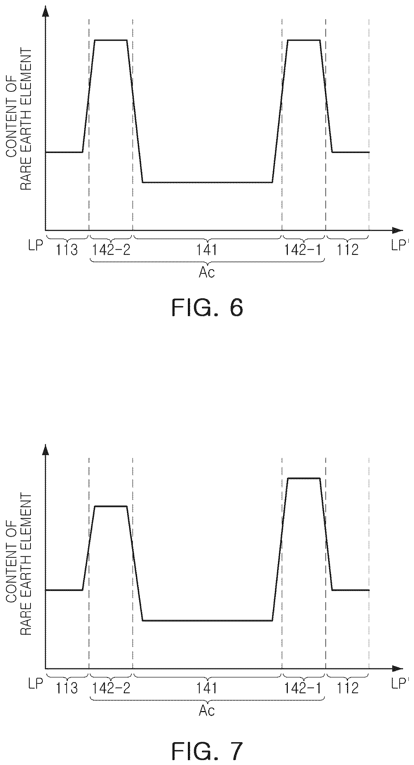

FIG. 6 is a graph indicating a content of rare earth elements according to LP-LP' in FIG. 5 according to an embodiment.

FIG. 7 is a graph indicating a content of rare earth elements according to LP-LP' in FIG. 5 according to another embodiment.

Hereinafter, a multilayer electronic component according to some embodiments will be described in greater detail with reference to FIGS. 1 to 7. A multilayer ceramic capacitor will be described as an example of a multilayer electronic component, but an embodiment thereof is not limited thereto, and the multilayer ceramic capacitor may be applied to various multilayer electronic components, such as an inductor, a piezoelectric element, a varistor, or a thermistor.

A multilayer electronic component 100 according to some embodiments may include a body 110 including a capacitance formation portion Ac including dielectric layers 111a and 111b and internal electrodes 121 and 122 disposed alternately with the dielectric layers 111a and 111b in a first direction, and cover portions 112 and 113 disposed on both ends of the capacitance formation portion Ac in the first direction; and external electrodes 131 and 132 disposed on the body 110, wherein the capacitance formation portion Ac includes an internal portion 141 disposed in a central portion in the first direction of the capacitance formation portion Ac, and an external portion 142 disposed between the internal portion 141 and the cover portions 112 and 113, and wherein, when the average number of moles of rare earth elements based on 100 moles of titanium (Ti) included in the internal portion 141 is defined as RE1, the average number of moles of rare earth elements based on 100 moles of titanium (Ti) included in the external portion 142 is defined as RE2, and the average number of moles of rare earth elements based on 100 moles of titanium (Ti) included in the cover portions 112 and 113 is defined as RE3, RE1 < RE2 and RE3 < RE2 may be satisfied.

In the body 110, the first and second dielectric layers 111a and 111b and the internal electrodes 121 and 122 may be alternately laminated.

More specifically, the body 110 may include the capacitance forming portion Ac disposed in the body 110 and forming capacitance including the first internal electrode 121 and the second internal electrode 122 alternately disposed to face each other with the first and second dielectric layers 111a and 111b interposed therebetween.

The capacitance formation portion Ac may include the internal portion 141 and the external portion 142, which will be described later. Here, the dielectric layer included in the internal portion 141 may be referred to as the first dielectric layer 111a, and the dielectric layer included in the external portion 142 may be referred to as the second dielectric layer 111b. More specifically, the dielectric layer included in the first external portion 142-1 may be referred to as a 2-1 dielectric layer 111b-1, and the dielectric layer included in the second external portion 142-2 may be referred to as a 2-2 dielectric layer 111b-2.

Also, in some embodiments, when the multilayer electronic component 100 includes the cover portions 112 and 113, the dielectric layer included in the cover portions 112 and 113 may be defined as a third dielectric layer (not illustrated), and when the multilayer electronic component 100 includes side margin portions 114 and 115, the dielectric layer included in the side margin portions 114 and 115 may be defined as a fourth dielectric layer (not illustrated).

In some embodiments, the third dielectric layer 111c and the fourth dielectric layer are not illustrated in the drawings, but will be described with reference numerals for ease of description.

The shape of the body 110 may not be limited to any particular shape, but as illustrated, the body 110 may have a hexahedral shape or a shape similar to a hexahedral shape. Due to reduction of ceramic powder included in the body 110 during a firing process, the body 110 may not have an exactly hexahedral shape formed by linear lines but may have a substantially hexahedral shape.

The body 110 may have the first and second surfaces 1 and 2 opposing each other in the first direction, the third and fourth surfaces 3 and 4 connected to the first and second surfaces 1 and 2 and opposing in the second direction, and the fifth and sixth surfaces 5 and 6 connected to the first to fourth surfaces 1, 2, 3, and 4 and opposing each other in the third direction.

The plurality of first and second dielectric layers 111a and 111b forming the body 110 may be in a fired state, and a boundary between the adjacent first and second dielectric layers 111a and 111b may be integrated with each other such that the boundary may not be distinct without using a scanning electron microscope (SEM).

The raw material for forming the first and second dielectric layers 111a and 111b is not limited as long as sufficient capacitance may be obtained therewith, and generally, a perovskite (ABO₃) material may be used, and may include, for example, at least one selected from the group consisting of a barium titanate material, a lead composite perovskite material, and a strontium titanate material. A barium titanate material may include BaTiOs ceramic particles, and an example of the ceramic powder may include at least one selected from the group consisting of BaTiO₃, (Ba₁₋ₓCaₓ) TiO₃ (0<x<1), Ba (Ti_{1-y}Ca_{y}) O₃ (0<y<1), (Ba₁₋ₓCaₓ) (Ti_{1-y}Zr_{y}) O₃ (0<x<1, 0<y<1) and Ba(Ti_{1-y}Zr_{y}) O₃ (0<y<1) in which Ca (calcium) and Zr (zirconium) are partially dissolved.

Also, as a raw material for forming the first and second dielectric layers 111a and 111b, various ceramic additives, organic solvents, binders, and dispersants may be added to particles such as barium titanate (BaTiO₃) depending on the purpose of the embodiment. For example, the first and second dielectric layers 111a and 111b may further include rare earth elements, but an embodiment thereof is not limited thereto, and the first dielectric layer 111a may not include rare earth elements, and only the second dielectric layer 111b may include rare earth elements.

Since the first and second dielectric layers 111a and 111b may be formed using a dielectric material such as barium titanate (BaTiO₃), the first and second dielectric layers 111a and 111b may include a dielectric microstructure after firing. The dielectric microstructure may include a plurality of grains, a grain boundary disposed between the adjacent grains, and a triple point at which three or more of the grain boundaries are in contact with each other, and a plurality of triple points may be included.

A thickness td of the first and second dielectric layers 111a and 111b may not be limited to any particular example.

To ensure reliability of the multilayer electronic component 100 in a high voltage environment, the thickness of the first and second dielectric layers 111a and 111b may be 10.0 um or less. Also, to implement miniaturization and high capacitance of the multilayer electronic component 100, the thickness of the first and second dielectric layers 111a and 111b may be 3.0 um or less. To easily implement ultra-miniaturization and high capacitance, the thickness of the first and second dielectric layers 111a and 111b may be 1.0 um or less, preferably 0.6 um or less, and more preferably 0.4 um or less.

Here, the thickness td of first and second dielectric layers 111a and 111b may refer to the thickness td of the first and second dielectric layers 111a and 111b disposed between the first and second internal electrodes 121 and 122.

The thickness td of the first and second dielectric layers 111a and 111b may refer to the size, in the first direction, of the first and second dielectric layers 111a and 111b. Also, the thickness td of the first and second dielectric layers 111a and 111b may refer to the average thickness td of the first and second dielectric layers 111a and 111b and may refer to the average size, in the first direction, of the first and second dielectric layers 111a and 111b.

The average size, in the first direction, of the first and second dielectric layers 111a and 111b may be measured by scanning a cross-section in the first and second directions of the body 110 using a scanning electron microscope (SEM) with a magnification of 10,000. More specifically, the average size, in the first direction, of the first and second dielectric layers 111a and 111b may indicate the average value calculated by measuring the sizes, in the first direction, of the first and second dielectric layers 111a and 111b at 10 points at an equal distance in the second direction in the scanned image. The 10 points at an equal distance may be specified in the capacitance formation portion Ac. Also, by extending the measurement of the average value to 10 first and second dielectric layers 111a and 111b, the average size, in the first direction, of the first and second dielectric layers 111a and 111b may be further generalized.

The internal electrodes 121 and 122 may be laminated alternately with the first and second dielectric layers 111a and 111b.

The internal electrodes 121 and 122 may include a first internal electrode 121 and a second internal electrode 122, the first and second internal electrodes 121 and 122 may be alternately disposed to face each other with the first and second dielectric layers 111a and 111b included in the body 110 interposed therebetween, and may be exposed to the third and fourth surfaces 3 and 4 of the body 110, respectively.

More specifically, the first internal electrode 121 may be spaced apart from the fourth surface 4 and may be exposed through the third surface 3, and the second internal electrode 122 may be spaced apart from the third surface 3 and may be exposed through the fourth surface 4. The first external electrode 131 may be disposed on the third surface 3 of the body 110 and may be connected to the first internal electrode 121, and the second external electrode 132 may be disposed on the fourth surface 4 of the body 110 and may be connected to the second internal electrode 122.

That is, the first internal electrode 121 may not be connected to the second external electrode 132 and may be connected to the first external electrode 131, and the second internal electrode 122 may not be connected to the first external electrode 131 and may be connected to the second external electrode 132. In this case, the first and second internal electrodes 121 and 122 may be electrically separated from each other by the first and second dielectric layers 111a and 111b disposed therebetween.

The body 110 may be formed by alternately laminating ceramic green sheets on which the first internal electrodes 121 are printed and ceramic green sheets on which the second internal electrodes 122 are printed, and firing the sheets.

The material for forming the internal electrodes 121 and 122 is not limited to any particular example, and a material having excellent electrical conductivity may be used. For example, the internal electrodes 121 and 122 may include one or more selected from the group consisting of nickel (Ni), copper (Cu), palladium (Pd), silver (Ag), gold (Au), platinum (Pt), tin (Sn), tungsten (W), titanium (Ti), and alloys thereof.

Also, the internal electrodes 121 and 122 may be formed by printing conductive paste for internal electrodes including one or more selected from the group consisting of nickel (Ni), copper (Cu), palladium (Pd), silver (Ag), gold (Au), platinum (Pt), tin (Sn), tungsten (W), titanium (Ti), and alloys thereof on a ceramic green sheet. A screen printing method or a gravure printing method may be used as a method of printing the conductive paste for internal electrodes, but an embodiment thereof is not limited thereto.

The thickness te of the internal electrodes 121 and 122 may not be limited to any particular example.

To ensure reliability of the multilayer electronic component 100 in a high voltage environment, the thickness te of the internal electrodes 121 and 122 may be 3.0 um or less. Also, to implement miniaturization and high capacitance of the multilayer electronic component 100, the thickness of the internal electrodes 121 and 122 may be 1.0 um or less. To easily implement ultra-miniaturization and high capacitance, the thickness of the internal electrodes 121 and 122 may be 0.6 um or less, and more preferably 0.4 um or less.

Also, the thickness te of the internal electrodes 121 and 122 may indicate the size of the internal electrodes 121 and 122 in the first direction. Also, the thickness te of internal electrodes 121 and 122 may indicate the average thickness te of internal electrodes 121 and 122, and may indicate the average size of internal electrodes 121 and 122 in the first direction.

The average size, in the first direction, of the internal electrodes 121 and 122 may be measured by scanning a cross-section of the body 110 using a scanning electron microscope (SEM) with a magnification of 10,000X. More specifically, an average value may be measured from the sizes, in the first direction, of the internal electrode at 10 points at an equal distance in the second direction in the scanned image. The 10 points at an equal distance may be designated in the capacitance formation portion Ac. Also, by extending the measurement of the average value to 10 internal electrodes, the average size of the internal electrodes 121 and 122 may be further generalized.

In some embodiments, the internal electrodes 121 and 122 adjacent to each other in the first direction may include regions protruding toward each other in the first direction, for example, may include regions protruding in a convex shape. When the internal electrodes 121 and 122 include regions protruding in a convex shape toward each other, the size in the first direction of the first and second dielectric layers 111a and 111b disposed between the first direction of the internal electrodes 121 and 122 may be reduced. In this case, insulation breakdown may occur as the thickness of the dielectric layer to which the electric field is applied decreases. In this case, when the region of the first and second dielectric layers 111a and 111b, which has a reduced thickness, includes rare earth elements, electric field concentration phenomenon may be alleviated such that insulation breakdown may be prevented.

In some embodiments, the average thickness td of at least one of the plurality of first and second dielectric layers 111a and 111b and the average thickness te of at least one of the plurality of internal electrodes 121 and 122 may satisfy 2×te < td.

In other words, the average thickness td of the first and second dielectric layers 111a and 111b may be greater than twice the average thickness te of one of the internal electrodes 121 and 122. Preferably, the average thickness td of the plurality of first and second dielectric layers 111a and 111b may be greater than twice the average thickness te of the plurality of internal electrodes 121 and 122.

Generally, a high-voltage electronic component may have an issue in terms of reliability due to a decrease in breakdown voltage (BDV) in a high-voltage environment.

Accordingly, to prevent a decrease in breakdown voltage under a high voltage environment, by configuring the average thickness td of the first and second dielectric layers 111a and 111b to be larger than twice the average thickness te of the internal electrodes 121 and 122, the thickness of the dielectric layer, which is the distance between the internal electrodes, may be increased and breakdown voltage properties may be improved.

When the average thickness td of the first and second dielectric layers 111a and 111b is less than twice the average thickness te of the internal electrodes 121 and 122, the average thickness of the dielectric layer, which is the distance between the internal electrodes, may be reduced such that the breakdown voltage may decrease, and a short may occur between the internal electrodes.

The body 110 may include the cover portions 112 and 113 disposed on both end-surfaces of the capacitance forming portion Ac in the first direction.

Specifically, the body 110 may include a first cover portion 112 disposed on one surface in the first direction of the capacitance formation portion Ac and a second cover portion 113 disposed on the other surface in the first direction of the capacitance formation portion Ac. More specifically, the body 110 may include the upper cover portion 112 disposed in the upper portion in the first direction of the capacitance formation portion Ac and the lower cover portions 113 disposed in the lower portion in the first direction of the capacitance formation portion Ac.

The upper cover portion 112 and the lower cover portion 113 may be formed by laminating a single first and second dielectric layers 111a and 111b or two or more first and second dielectric layers 111a and 111b on the upper and lower surfaces of the capacitance forming portion Ac in the first direction, and may prevent damages to the internal electrodes 121 and 122 due to physical or chemical stress.

The upper cover portion 112 and the lower cover portion 113 may not include the internal electrodes 121 and 122 and may include the same material as that of the first and second dielectric layers 111a and 111b. That is, the upper cover portion 112 and the lower cover portion 113 may include a ceramic material, for example, a barium titanate (BaTiO₃) ceramic material, and may further include rare earth elements.

The cover portions 112 and 113 may be formed using a dielectric material such as barium titanate (BaTiO₃) and may thus include a dielectric microstructure after firing. The dielectric microstructure may include a plurality of grains, the grain boundary disposed between adjacent grains, and a triple point at which three or more grain boundaries are in contact with each other.

The thickness tc of the cover portion 112 and 113 may not be limited to any particular example.

However, to easily implement miniaturization and high capacitance of multilayer electronic components, the thickness tc of the cover portions 112 and 113 may be 100 um or less, preferably 30 um or less. More preferably, the thickness may be 20 um or less in an ultra-small product.

Here, the thickness tc of the cover portion 112 or 113 may refer to the size, in the first direction, of the cover portion 112 or 113. Also, the thickness tc of the cover portions 112 and 113 may refer to the average thickness tc of the cover portions 112 and 113, and may refer to the average size, in the first direction, of the cover portions 112 and 113.

The average size of the cover portions 112 and 113 may be measured by scanning a cross-section in the first and second directions of the body 110 using a scanning electron microscope (SEM) at a magnification of 10,000. More specifically, the average size may indicate the average value calculated by measuring the sizes, in the first direction, at 10 points at an equal distance in the second direction in the scanned image of the cover portion.

Also, the average size, in the first direction, of the cover portion measured by the above method may be substantially the same as the average size, in the first direction, of the cover portion in the cross-section in the first and third directions of the body 110.

The multilayer electronic component 100 may include side margin portions 114 and 115 disposed on both end-surfaces in the third direction of the body 110.

More specifically, the side margin portions 114 and 115 may include a first side margin portion 114 disposed on the fifth surface 5 and a second side margin portion 115 disposed on the sixth surface 6 of the body 110.

As illustrated in FIG. 4, the side margin portions 114 and 115 may refer to a region between both end-surfaces in the third direction of the first and second internal electrodes 121 and 122 and the boundary surface of the body 110 with respect to the cross-section in the first and third directions of the body 110.

The side margin portions 114 and 115 may be formed by forming the internal electrodes 121 and 122 on a ceramic green sheet by applying a conductive paste other than the region in which the side margin portions 114 and 115 are formed, cutting the laminated internal electrodes 121 and 122 to expose the fifth and sixth surfaces 5 and 6 of the body 110 to prevent a step difference caused by the internal electrodes 121 and 122, and laminating a single fourth dielectric layer or two or more fourth dielectric layer in the third direction on both end-surfaces in the third direction of the capacitance forming portion Ac.

The side margin portions 114 and 115 may prevent damages to the internal electrodes 121 and 122 due to physical or chemical stress.

The first side margin portion 114 and the second side margin portion 115 may not include the internal electrodes 121 and 122 and may include the same material as that of the first and second dielectric layers 111a and 111b. That is, the first side margin portion 114 and the second side margin portion 115 may include a ceramic material, for example, a barium titanate (BaTiO₃) ceramic material, and may further include rare earth elements.

The side margin portions 114 and 115 may be formed using a dielectric material such as barium titanate (BaTiO₃), such that the side margin portions 114 and 115 may include a dielectric microstructure after firing. The dielectric microstructure may include a plurality of grains, a grain boundary disposed between the adjacent grains, and a triple point at which three or more of the grain boundaries are in contact with each other, and a plurality of triple points may be included.

The width wm of the first and second side margin portions 114 and 115 may not be limited to any particular example.

However, to easily implement miniaturization and high capacitance of the multilayer electronic component 100, the width wm of the side margin portions 114 and 115 may be 100 um or less, preferably 30 um or less, and may be more preferably 20 um or less in an ultra-small product.

Here, the width wm of the side margin portions 114 and 115 may refer to the size of the side margin portions 114 and 115 in the third direction. Also, the width wm of the side margin portions 114 and 115 may refer to the average width wm of the side margin portions 114 and 115, and the average size in the third direction of the side margin portions 114 and 115.

The average size in the third direction of the side margin portion 114 and 115 may be measured by scanning a cross-section in the first and third directions of the body 110 using a scanning electron microscope (SEM) at a magnification of 10,000. More specifically, the average size may be an average value measured from the sizes in the third direction at 10 points at an equal distance in the first direction in the scanned image of one of the side margin portions.

In some embodiments, the ceramic electronic component 100 may have two external electrodes 131 and 132, but the number of the external electrodes 131 and 132 or the shape thereof may be varied depending on the forms of the internal electrode 121 and 122 or other purposes.

The external electrodes 131 and 132 may be disposed on the body 110 and may be connected to the internal electrodes 121 and 122.

More specifically, the first and second external electrodes 131 and 132 may be disposed on the third and fourth surfaces 3 and 4 of the body 110, respectively, and may include first and second external electrodes 131 and 132 connected to the first and second internal electrodes 121 and 122, respectively. That is, the first external electrode 131 may be disposed on the third surface 3 of the body and may be connected to the first internal electrode 121, and the second external electrode 132 may be disposed on the fourth surface 4 of the body and may be connected to the second internal electrode 122.

Also, the first and second external electrodes 131 and 132 may extend and be disposed on portions of the first and second surfaces 1 and 2 of the body 110, or may extend and be disposed on a portion of the fifth and sixth surfaces 5 and 6 of the body 110. That is, the first external electrode 131 may be disposed on a portion of the first, second, fifth, and sixth surfaces 1, 2, 5, and 6 of the body 110, and the third surface 3 of the body 110, and the second external electrode 132 may be disposed on a portion of the first, second, fifth, and sixth surfaces 1, 2, 5, and 6 of the body 110, and the third surface 3 of the body 110.

The first and second external electrodes 131 and 132 may be formed of any material having electrical conductivity, such as metal, and a specific material may be determined in consideration of electrical properties and structural stability, and the external electrodes 131 and 132 may have a multilayer structure.

For example, the external electrodes 131 and 132 may include an electrode layer disposed on the body 110 and a plating layer disposed on the electrode layer.

For a more specific example of the electrode layer, the electrode layer may include first electrode layers 131a and 132a, which may be fired electrodes including a first conductive metal and glass, or second electrode layers 131b and 132b, which may be resin-based electrodes including second conductive metal and resin.

Here, the conductive metal included in the first electrode layers 131a and 132a may be referred to as a first conductive metal, and the conductive metal included in the second electrode layers 131b and 132b may be referred to as a second conductive metal. In this case, the first conductive metal and the second conductive metal may be the same or different from each other, and when a plurality of conductive metals are included, only a portion thereof may include the same conductive metal, but an embodiment thereof is not limited thereto.

Also, the electrode layers 131a, 132a, 131b, and 132b may be formed by forming a fired electrode and a resin-based electrode on the body 110 in order.

Also, the electrode layers 131a, 132a, 131b, and 132b may be formed by transferring a sheet including a conductive metal onto the body, or may be formed by transferring a sheet including a conductive metal onto the fired electrode.

A material having excellent electrical conductivity may be used as a conductive metal included in the electrode layers 131a, 132a, 131b, and 132b. For example, the conductive metal may include one or more selected from the group consisting of nickel (Ni), copper (Cu), palladium (Pd), silver (Ag), gold (Au), platinum (Pt), tin (Sn), tungsten (W), titanium (Ti) and alloys thereof, but an embodiment thereof is not limited thereto.

In some embodiments, the electrode layers 131a, 132a, 131b, and 132b may have a two-layer structure including the first electrode layers 131a and 132a and the second electrode layers 131b and 132b, and accordingly, the external electrodes 131 and 132 may include first electrode layers 131a and 132a including a first conductive metal and glass, and second electrode layers 131b and 132b disposed on the first electrode layers 131a and 132a and including a second conductive metal and resin.

The first electrode layers 131a and 132a may improve bondability with the body 110 by including glass, and the second electrode layers 131b and 132b may improve warpage strength by including resin.

The first conductive metal included in the first electrode layers 131a and 132a is not limited to any particular example as long as the material may be electrically connected to the internal electrodes 121 and 122 to form capacitance, and for example, the first conductive metal may include one or more selected from the group consisting of nickel (Ni), copper (Cu), palladium (Pd), silver (Ag), gold (Au), platinum (Pt), tin (Sn), tungsten (W), titanium (Ti) and alloys thereof.

The first electrode layers 131a and 132a may be formed by applying a conductive paste prepared by adding glass frit to the first conductive metal particles and firing the paste.

The second conductive metal included in the second electrode layers 131b and 132b may allow the layers to be electrically connected to the first electrode layers 131a and 132a.

The conductive metal included in the second electrode layers 131b and 132b is not limited to any particular example as long as the material may be electrically connected to the electrode layers 131a and 132a, and may include one or more selected from the group consisting of nickel (Ni), copper (Cu), palladium (Pd), silver (Ag), gold (Au), platinum (Pt), tin (Sn), tungsten (W), titanium (Ti) and alloys thereof.

The second conductive metal included in the second electrode layers 131b and 132b may include one or more of spherical particles and flake-type particles. In other words, the conductive metal may only include flake-type particles, only spherical particles, or may be a mixture of flake-type particles and spherical particles. Here, the spherical particles may have shapes not completely spherical, for example, shapes in which the length ratio (major axis/minor axis) between the major axis and the minor axis is 1.45 or higher. Flake-type particles may refer to particles having a flat and elongated shape, and are not limited to any particular example, and for example, a length ratio of the major axis between the minor axis (major axis/minor axis) may be 1.95 or more. The length of the major axis and the minor axis of the spherical particles and the flake-type particles may be measured from an image obtained by scanning the cross-sections in first and second direction of the central portion in the third direction of the multilayer electronic component using a scanning electron microscope (SEM) .

The resin included in the second electrode layers 131b and 132b may secure bondability and may absorb impacts. The resin included in the second electrode layers 131b and 132b is not limited to any particular example as long as the resin has bondability and impact absorption properties and may be mixed with second conductive metal particles to create a paste, and may include, for example, an epoxy resin

Also, the second electrode layers 131b and 132b may include a plurality of metal particles, an intermetallic compound and resin. By including an intermetallic compound, electrical connectivity with the first electrode layers 131a and 132a may be improved. The intermetallic compound may improve electrical connectivity by connecting a plurality of metal particles to each other, and may surround a plurality of metal particles and may connect the metal particles to each other.

In this case, the intermetallic compound may include a metal having a melting point lower than a curing temperature of resin. That is, as the intermetallic compound may include a metal having a melting point lower than the curing temperature of resin, the metal having a melting point lower than the curing temperature of the resin may melt during a drying and curing process, may form an intermetallic compound with a portion of the metal particles and may surround the metal particles. In this case, the intermetallic compound may include a low melting point metal, preferably below 300°C.

For example, Sn having a melting point of 213-220°C may be included. During the drying and hardening p0rocess, Sn may be melted, and the melted Sn may wet metal particles at high melting points such as Ag, Ni, or Cu by capillary action, may react with a portion of Ag, Ni or Cu metal particles and may form intermetallic compounds such as Ag₃Sn, Ni₃Sn₄, Cu₆Sn₅, or Cu₃Sn. Ag, Ni or Cu not participating in the reaction may remain in the form of metal particles.

Accordingly, the plurality of metal particles may include one or more selected from the group consisting of Ag, Ni and Cu, and the intermetallic compound may include one or more of Ag₃Sn, Ni₃Sn₄, Cu₆Sn₅ and Cu₃Sn.

The plating layers 131c and 132c may improve mounting properties.

The type of the plating layers 131c and 132c is not limited to any particular example, and the plating layers 131c and 132c may be single-layer plating layers 131c and 132c including at least one selected from the group consisting of nickel (Ni), tin (Sn), palladium (Pd), and alloys thereof, and may be formed in a plurality of layers.

For a more specific example of the plating layers 131c and 132c, the plating layers 131c and 132c may be Ni plating layers or Sn plating layers, and Ni plating layers and Sn plating layers may be formed in order on the electrode layers, and a Sn plating layer, a Ni plating layer, and a Sn plating layer may be formed in order. Also, the plating layers 131c and 132c may include a plurality of Ni plating layers and/or a plurality of Sn plating layers.

The size of the multilayer electronic component 100 may not be limited to any particular example.

However, to implement both miniaturization and high capacitance, the number of laminates may need to be increased by reducing the thickness of the dielectric layer and the internal electrode, such that the effect described in the embodiments may be noticeable in the multilayer electronic component 100 having a size of 3216 (length × width: 3.2 mm × 1.6 mm) or less.

Hereinafter, the multilayer electronic component 100 according to some embodiments of the present disclosure will be described in greater detail.

In some embodiments, the multilayer electronic components may need to have excellent reliability to operate smoothly even in harsh environments such as high temperature, high pressure, or the like. To solve this problem, reliability may be improved by adding rare earth elements. More specifically, the "deterioration" mechanism, which is directly related to reliability, may be affected by the movement of oxygen vacancy. To suppress the deterioration, by reducing the concentration of oxygen vacancy, insulation resistance degradation in high temperature environments may be prevented, and to reduce insulation resistance degradation, by implementing microstructure similar to a core-shell structure including a predetermined percentage of rare earth elements, reliability may improve. However, when rare earth elements are added excessively, the dielectric constant may deteriorate or the target temperature coefficient of capacitance (TCC) properties may not be satisfied, and rare earth elements may be expensive, which may be not economical.

Also, "burnt," one of these deteriorations, may be likely to occur near an interfacial surface between the capacitance formation portion and the cover portion to protect the capacitance formation portion, such that reliability of the multilayer electronic component may be reduced.

In the case of the dielectric layer disposed in the adjacent region of the first and second cover portions 112 and 113 (the region of the external portion described later) rather than the dielectric layer disposed in the central portion of the capacitance formation portion Ac (region of the internal portion described later), the dielectric layer may be further expanded in the second direction (length direction) while voltage is applied, and the size (thickness) of the dielectric layer in the third direction may be further reduced. Accordingly, as the voltage applied per unit thickness (V/um) increases, a voltage higher than the insulation breakdown voltage (BDV) may be applied, and accordingly, deterioration may occur easily in the dielectric layer disposed in the adjacent region of the first and second cover portions 112 and 113 of the capacitance formation portion Ac (region of the external portion described later).

Here, "burnt" may indicate that, due to excessive electrical stress applied to the multilayer electronic component, high current may flow in the multilayer electronic component, a portion of regions of the body 110 may be broken or burnt and discolored due to high temperature heating in the multilayer electronic component.

In some embodiments, the capacitance formation portion Ac may include an internal portion 141 disposed in the central portion in the first direction of the capacitance formation portion Ac, and an external portion 142 disposed between the internal portion 141 and the first and second cover portions 112 and 113, and when the average number of moles of rare earth elements based on 100 moles of titanium (Ti) included in the internal portion is defined as RE1, the average number of moles of rare earth elements based on 100 moles of titanium (Ti) included in the external portion is defined as RE2, and the average number of moles of rare earth elements based on 100 moles of titanium (Ti) included in the first and second cover portion is defined as RE3, RE1 < RE2 and RE3 < RE2 may be satisfied.

In some embodiments, any rare earth elements may be used to improve reliability of the multilayer electronic component, and rare earth elements may include at least one of dysprosium (Dy) or terbium (Tb).

RE2 is the average number of moles of rare earth elements based on 100 moles of titanium (Ti) included in the external portion 142, RE1 is the average number of moles of rare earth elements based on 100 moles of titanium (Ti) included in internal portion 141, and RE3 is the average number of moles of rare earth elements based on 100 moles of titanium (Ti) included in the first and second cover portions 112 and 113. When RE2 is greater than RE1, and RE2 is greater than RE3, deterioration with the cover portion, occurring near the capacitance formation portion and the interfacial surface to protect the capacitance formation portion, may be prevented, and accordingly, reliability of the multilayer electronic components may be improved.

Also, by adding a small amount or almost no rare earth elements to the internal portion 141 or the first and second cover portions 112 and 113, dielectric properties of the multilayer electronic component may be improved or dielectric loss may be reduced, which may be economical.

When RE2 is RE1 or less(RE2≤RE1), or RE2 is RE3 or less (RE2≤RE3), the average number of moles of rare earth elements based on 100 moles of titanium (Ti) included in the first and second cover portions 112 and 113, it may be difficult to effectively prevent deterioration occurring in the external portion 142, which is near the interfacial surface with the first and second cover portions 112 and 113 of the capacitance formation portion Ac, and reliability of the multilayer electronic component 100 may be reduced.

Also, in some embodiments, as an example of a more specific method of measuring the content of elements included in each component of the multilayer electronic component 100, in the case of a destructive method, components may be analyzed using energy dispersive X-ray spectroscopy (EDS) mode of a scanning electron microscope (SEM), EDS mode of a transmission electron microscope (TEM), or scanning transmission electron microscope (TEM) EDS mode in (STEM). For example, a thinly sliced analysis sample may be prepared using a focused ion beam (FIB) device in the region of a cross-section of the sintered body or the side margin portion including the dielectric microstructure. Thereafter, the damaged layer on the surface of the thinned sample may be removed using xenon (Xe) or argon (Ar) ion milling, and thereafter, qualitative/quantitative analysis may be performed by mapping each component to be measured in the image obtained using SEM-EDS, TEM-EDS, or STEM-EDS. In this case, the qualitative/quantitative analysis graph of each component may be represented in terms of mass percentage (wt%), atomic percentage (at%), or mole percentage (mol%) of each element. In this case, the number of moles of a specific component may be converted to the number of moles of another specific component, and may be represented as the number of moles of rare earth elements based on 100 moles of titanium (Ti), for example.

As another method, the chip may be pulverized and the region including the dielectric microstructure may be selected, and components of the region including the dielectric microstructure may be analyzed using devices such as inductively coupled plasma spectrometry (ICP-OES) and inductively coupled plasma mass spectrometry (ICP-MS).

As described above, the cover portions 112 and 113 may include a first cover portion 112 disposed on an end-surface in the first direction of capacitance formation portion Ac, and a second cover portion 113 disposed on the other end-surface in the first direction of the capacitance formation portion Ac.

Also, the external portion 142 may include a first external portion 142-1 disposed between the internal portion 141 and the first cover portion 112 and a second external portion 142-2 disposed between the internal portion 141 and the second cover portion 113.

In this case, the average size in the first direction of the external portion 142 may be 30% or less than the average size in the first direction of the capacitance formation portion Ac. More specifically, the average size in the first direction of each of the first and second external portions 142-1 and 142-2 may be 15% or less of the average size in the first direction of the capacitance formation portion Ac.

For example, with respect to the cross-section in the first and second direction of the body 110, when the first direction average size of the capacitance formation portion Ac other than the cover portions 112 and 113 is defined as Ta, and the average size of the external portion 142 in the first direction is defined as T2, the ratio of the average size T2 in the first direction of the external portion to the average size Ta in the first direction of the capacitance formation portion (T2/Ta) represented as a percentage may be 30% or less. More specifically, when the average size in the first direction of the first external portion 142-1 is defined as T2-1 and the average size in the first direction of the second external portion 142-2 is defined as T2-2, the ratio (T2-1/Ta) of the first direction average size T2-1 of the first external portion 142-1 to the first direction average size Ta of the capacitance formation portion Ac may be 15% or less, and the ratio (T2-2/Ta) of the first direction average size T2-2 of the second external portion 142-2 to the first direction average size Ta of the capacitance formation portion Ac may be 15% or less in percentage. In embodiments, T2-1, the average size in the first direction of the first external portion 142-1, and T2-2, the average size in the first direction of the second external portion 142-2, may be represented in letters, not mathematical formulas.

The first direction average size T2-1 and T2-2 of each of the first and second external portions 142-1 and 142-2 may satisfy 15% or less of the first direction average size Ta of the capacitance formation portion Ac such that deterioration occurring mainly near the interfacial surface between capacitance formation portion Ac and cover portions 112 and 113 may be suppressed effectively and reliability may be improved.

When the first direction average size T2-1 and T2-2 of each of the first and second external portions 142-1 and 142-2 exceeds 15% of the first direction average size Ta of the capacitance formation portion Ac, dielectric properties may deteriorate.

In some embodiments, the average number of moles RE2 of the rare earth elements based on 100 moles of titanium (Ti) included in the external portion 142 may be 1 mole or more and 5 moles or less, that is, 1 mole ≤ RE2 ≤ 5 moles may be satisfied.

As RE2 satisfies 1 mole or more and 5 moles or less, growth of grains included in the external portion 142 may be prevented, and expansion of the external portion 142 in the second direction may be prevented, such that reduction of the size (thickness) in the third direction may prevented. Accordingly, the voltage (V/um) applied per unit thickness may be prevented, such that deterioration in the external portion 142 may be effectively suppressed, and reliability may be improved.

When RE2 is less than 1 mole, due to excessive grain growth of grains included in the external portion 142, and expansion of the external portion 142 in the second direction, the size (thickness) in the third direction may decrease, and it may be difficult to prevent deterioration, which may cause deterioration of reliability. When RE2, the average number of moles of rare earth elements based on 100 moles of titanium (Ti) included in the external portion 142, exceeds 5 moles, dispersibility may be reduced due to excessive addition of rare earth elements or grain growth may be excessively suppressed, such that dielectric properties may deteriorate.

The difference (RE2-RE1) between RE2 and RE1 may be 0.1 moles or more and more 5 moles or less, and in other words, 0.1 moles ≤ RE2-RE1 ≤ 5 moles may be satisfied.

The difference (RE2-RE1) between RE2 and RE1 may satisfy 0.1 moles or more and 5 moles or less, reliability may be prevented from deteriorating.

The difference (RE2-RE1) between RE2 and RE1 is less than 0.1 moles, the effect of suppressing expansion in the second direction of the external portion 142 may be insignificant, such that the size (thickness) in the third direction may decrease, and the applied voltage per unit thickness (V/um) may increase, and reliability may decrease. When the difference (RE2-RE1) between RE2 and RE1 exceeds 5 moles, dispersibility may degrade due to excessive addition of rare earth elements to the external portion 142 or a difference in sintering between the internal portion 141 and the external portion 142 may occur, which may cause cracks due to delayed sintering.

With reference to FIG. 6, a graph indicating the content of rare earth elements by performing a line-profile along the LP-LP' line in FIG. 5, the content of rare earth elements may change rapidly at the boundary surfaces between the cover portions 112 and 113 and the external portions 142-1 and 142-2, and the content of rare earth elements may change rapidly at the boundary surfaces between the external portions 142-1 and 142-2 and the internal portion 141. The internal portion 141, the external portions 142-1 and 142-2, and the cover portions 112 and 113 may be distinguished based on the point at which the content of rare earth elements changes rapidly, but an embodiment thereof is not limited thereto. Here, the content of rare earth elements may be represented preferably in atomic percentage (at%), or may correspond to mass percentage (wt%), mole percentage (mol%), or the number of moles of rare earth elements based on 100 moles of titanium (Ti).

In some embodiments, the internal portion 141 may not include rare earth elements. For example, the number of moles RE1 of rare earth elements based on 100 moles of titanium (Ti) included in the internal portion 141 may be less than 0.1 moles. Alternatively, the atomic percentage (at%) of rare earth elements included in the internal portion 141 may be less than 0.5 at%.

Even when the internal portion 141 does not include rare earth elements, the external portion 142 may include rare earth elements, such that reliability of the multilayer electronic component may be improved, target TCC properties may be satisfied, and moisture resistance reliability may be improved, which may be economical.

As described above, the internal portion 141 and the external portion 142 may include dielectric grains, and the average size of the dielectric grains included in the external portion 142 may be smaller than the average size of the dielectric grains included in the internal portion 141.

The rare earth elements may control grain growth of dielectric grains. When RE2 is greater than RE1, growth of the dielectric grains included in the external portion 142 may be prevented, and the average size of the dielectric grains included in the internal portion 141 may be smaller than the average size of the dielectric grains included in the external portion 142.

The average size of dielectric grains of the internal portion 141 and the external portion 142 may be measured, for example, with respect to the cross-sections in the first and second direction of the body including the capacitance formation portion, by averaging the size of the dielectric grains included in the 5 um × 5 um region of the cross-section of the internal portion, and averaging the size of dielectric grains included in the 5 um × 5 um region of cross-section of the external portion, but an embodiment thereof is not limited thereto. Here, the size of the dielectric grain may refer to the maximum or minimum diameter of the dielectric grain, or may correspond to the average value of the maximum and minimum diameters.

When the average size of the dielectric grains included in the external portion 142 is smaller than the average size of the dielectric grains included in the internal portion 141, the number of dielectric grains in the external portion 142 may increase, and the insulation breakdown voltage (BDV) caused by electric field concentration may be prevented, and reliability may be improved.

The average number of pores in the external portion 142 may be less than the number of pores in the internal portion 141. Here, the average number of pores in the external portion 142 may be the average number of pores in the first and second external portions 142-1 and 142-2.

The number of pores in the internal portion 141 and the external portion 142 may be measured, for example, based on the cross-sections in the first and second directions of the body including the capacitance formation portion, by measuring the number of pores included in the 5 um × 5 µm region, and by averaging the number of pores included in the 5 um × 5 um region of the cross-section of the first and second external portion, but an embodiment thereof is not limited thereto.

When RE2 is greater than RE1, generation of pores may be suppressed by controlling grain growth of the dielectric grain included in the external portion 142, and accordingly, the average number of pores included in the external portion 142 may be lower than the number of pores included in the internal portion 141.

When the average number of pores in the external portion 142 is less than the number of pores in the internal portion 141, by reducing the number of pores in the external portion 142 region which may be vulnerable to permeation of external moisture, moisture resistance reliability of the multilayer electronic component 100 may be improved.

In some embodiments, RE2a, the number of moles of the rare earth elements based on 100 moles of titanium (Ti) included in the first external portion 142-1 may be greater than RE2b, the number of moles of rare earth elements based on 100 moles of titanium (Ti) included in the second external portion 142-2, and in other words, RE2b < RE2a may be satisfied.

Although both the first external portion 141-1 and the second external portion 141-2 correspond to regions in which deterioration frequently occurs, deterioration may be more likely to occur in the region of the first external portion 141-1 than in the second external portion 141-2. Accordingly, by adding more rare earth elements to the first external portion 141-1 than to the second external portion 141-2, deterioration may be suppressed and reliability may be improved.

With reference to FIG. 7 which is a graph indicating the content of the rare earth elements by performing a line-profile along the LP-LP' line in FIG. 5, the content of the rare earth elements may change rapidly at the boundary surfaces between the cover portions 112 and 113 and the external portions 142-1 and 142-2, and the content of the rare earth elements may change rapidly at the boundary surfaces between the external portions 142-1 and 142-2 and the internal portion 141. In this case, the content of the rare earth elements in the first external portion 142-1 may be greater than the content of the rare earth elements in the second external portion 142-2, and more specifically, the maximum content or the average content of the rare earth elements in the first external portion 142-1 may be greater than the maximum content or the average content of the rare earth elements in the second external portion 142-2. The internal portion 141, the external portion 142-1 and 142-2, and the cover portions 112 and 113 may be distinguished starting from the point at which the content of rare earth elements changes rapidly, but an embodiment thereof is not limited thereto. Here, the content of the rare earth elements may be represented preferably in atomic percentage (at%), but may correspond to mass percentage (wt%), mole percentage (mol%), or the number of moles of rare earth elements based on 100 moles of titanium (Ti).

Also, the average size of the dielectric grains included in the first external portion 142-1 may be smaller than the average size of the dielectric grains included in the second external portion 142-2.

The rare earth elements control grain growth of the dielectric grains, and when RE2a, the number of moles of rare earth elements based on 100 moles of titanium (Ti) included in the first external portion 142-1 is greater than RE2b, the number of moles of the rare earth elements based on 100 moles of titanium (Ti) included in second external portion 142-2, growth of dielectric grains included in the first external portion 142-1 may be further suppressed, and the average size of the dielectric grains included in the first external portion 142-1 may be smaller than the average size of the dielectric grains included in the second external portion 142-2.

When the average size of the dielectric grains included in the first external portion 142-1 is smaller than the average size of the dielectric grains included in the second external portion 142-2, the number of dielectric grain boundaries in the first external portion 142-1 may effectively suppress insulation breakdown voltage (BDV) caused by the electric field concentration, and reliability may be improved.

The number of pores in the first external portion 142-1 may be less than the number of pores in the second external portion 142-2.

RE2a, the number of moles of rare earth elements based on 100 moles of titanium (Ti) included in the first external portion 142-1, RE2b is greater than RE2b, the number of moles of rare earth elements based on 100 moles of titanium (Ti) included in the second external portion 142-2, growth of dielectric grains included in the first external portion 142-1 may be easily controlled, thereby preventing generation of pores, and accordingly, the number of pores included in the first external portion 142-1 may be less than the number of pores included in the second external portion 142-2.

When the number of pores included in the first external portion 142-1 is less than the number of pores included in the second external portion 142-2, moisture resistance reliability of the first external portion 142-1 more vulnerable to external moisture permeation than the second external portion 142-2 closer to the mounting surface may be improved, and moisture resistance reliability of the multilayer electronic component 100 may be further improved.

In some embodiments, the number of moles RE3 of the rare earth elements based on 100 moles of titanium (Ti) included in the cover portions 112 and 113 may be greater than RE1, the number of moles of the rare earth elements based on 100 moles of titanium (Ti) included in the internal portion 141, and in other words, RE1 < RE3 may be satisfied.

As described above, the cover portions 112 and 113 may protect the internal electrodes 121 and 122 included in the capacitance formation portion Ac, and by adding rare earth elements to the cover portions 112 and 113, the grain growth of dielectric grains may be easily controlled, insulation breakdown voltage (BDV) due to electric field concentration may be improved and, by suppressing the number of pores, moisture resistance reliability may be improved.

In other words, the average size of the dielectric grains included in the cover portions 112 and 113 may be smaller than the average size of the dielectric grains included in the internal portion 141.

The effect of the size of the dielectric grain may be the same as described above, and will thus not be described.

Also, the number of pores included in the cover portions 112 and 113 may be the same as described above, and will thus not be described.

The effect of the number of pores is the same as described above, so it will be omitted.

According to the aforementioned embodiments, the multilayer electronic component may have improved reliability by adding a relatively small content of rare earth elements.

Also, the multilayer electronic component may have improved reliability by adding rare earth elements differently for each region of the multilayer electronic component.

The embodiments do not necessarily limit the scope of the embodiments to a specific embodiment form. Instead, modifications, equivalents and replacements included in the disclosed concept and technical scope of this description may be employed. Throughout the specification, similar reference numerals are used for similar elements.

In the embodiments, the term "embodiment" may not refer to one same embodiment, and may be provided to describe and emphasize different unique features of each embodiment. The suggested embodiments may be implemented do not exclude the possibilities of combination with features of other embodiments. For example, even though the features described in an embodiment are not described in the other embodiment, the description may be understood as relevant to the other embodiment unless otherwise indicated.

Terms used in the present specification are for explaining the embodiments rather than limiting the embodiments. Unless explicitly described to the contrary, a singular form may include a plural form in the present specification

While the embodiments have been illustrated and described above, it will be configured as apparent to those skilled in the art that modifications and variations could be made without departing from the scope of the present disclosure as defined by the appended claims.

## Claims

1. A multilayer electronic component (100), comprising:
a body (110) including a capacitance formation portion (Ac) including dielectric layers (111) and internal electrodes (121, 122) disposed alternately with the dielectric layer (111) in a first direction, and cover portions (112, 113) disposed on both ends of the capacitance formation portion (Ac) in the first direction; and
external electrodes (131, 132) disposed on the body (110),
wherein the capacitance formation portion (Ac) includes an internal portion (141) disposed in a central portion in the first direction of the capacitance formation portion (Ac), and external portion (142) disposed between the internal portion (141) and the cover portions (112, 113), and
wherein, when an average number of moles of rare earth elements included in the internal portion (141) based on 100 moles of titanium (Ti) is defined as RE1, an average number of moles of rare earth elements included in the external portion (142) based on 100 moles of titanium (Ti) is defined as RE2, and an average number of moles of rare earth elements included in the cover portion (112, 113) based on 100 moles of titanium (Ti) is defined as RE3, RE1 < RE2 and RE3 < RE2 are satisfied.

2. The multilayer electronic component (100) of claim 1,
wherein the cover portion (112, 113) includes a first cover portion (112) disposed on one cross-section in the first direction of the capacitance formation portion (Ac) and a second cover portion (113) disposed on the other cross-section in the first direction of the capacitance formation portion (Ac),
wherein the external portion (142) includes a first external portion (142-1) disposed between the internal portion (141) and the first cover portion (112) and a second external portion (142-2) disposed between the internal portion (141) and the second cover portion (113), and
wherein an average size in the first direction of each of the first and second external portions (142-1, 142-2) is 15% or less of an average size in the first direction of the capacitance formation portion (Ac).

3. The multilayer electronic component (100) of claim 1, wherein RE2 satisfies 1 mole ≤ RE2 ≤ 5 moles.

4. The multilayer electronic component (100) of claim 1, wherein a difference between RE2 and RE1(RE2-RE1) satisfies 0.1 moles ≤ RE2-RE1 ≤ 5 moles.

5. The multilayer electronic component (100) of claim 1, wherein an average atomic percentage of the rare earth elements included in the internal portion (141) is less than 0.5 at%.

6. The multilayer electronic component (100) of claim 2, wherein, when a number of moles of rare earth elements included in the first external portion (142-1) based on 100 moles of titanium (Ti) is defined as RE2a, and a number of moles of rare earth elements included in the second external portion (142-2) based on 100 moles of titanium (Ti) is defined as RE2b, RE2b < RE2a is satisfied.

7. The multilayer electronic component (100) of claim 1,
wherein the internal portion (141) and the external portion (142) include dielectric grains, and
wherein an average size of the dielectric grains included in the external portion (142) is smaller than an average size of the dielectric grains included in the internal portion (141).

8. The multilayer electronic component (100) of claim 1, wherein an average number of pores in the external portion (142) is less than an average number of pores in the internal portion (141).

9. The multilayer electronic component (100) of claim 2,
wherein the first and second external portions (142-1, 142-2) include dielectric grains, and
wherein an average size of the dielectric grains included in the first external portion (142-1) is smaller than an average size of the dielectric grains included in the second external portion (142-2).

10. The multilayer electronic component (100) of claim 2, wherein a number of pores in the first external portion (142-1) is less than a number of pores in the second external portion (142-2).

11. The multilayer electronic component (100) of claim 1, wherein RE1 and RE3 satisfy RE1 < RE3.

12. The multilayer electronic component (100) of claim 1, wherein the rare earth elements include at least one of dysprosium (Dy) or terbium (Tb).

13. The multilayer electronic component (100) of claim 1, wherein adjacent internal electrodes (121, 122) among the plurality of internal electrodes (121, 122) include regions protruding toward each other in the first direction.

14. The multilayer electronic component (100) of claim 1, wherein an average size of at least one of the plurality of dielectric layers (111) in the first direction is 1.0 um or less.
